# EUROPÄISCHE PATENTSCHRIFT

(11) **EP 3 487 267 B1**
(45) Veröffentlichungstag und Bekanntmachung des Hinweises auf die Patenterteilung: **11.12.2024**
(21) Anmeldenummer: 17202611.4
(22) Anmeldetag: 20.11.2017
(51) Int. Cl.: H05B 45/00, H05B 47/10, G01M 17/007

(54) **HOCHLEISTUNGSBELICHTUNG FÜR SIMULATIONSANORDNUNG FÜR KRAFTFAHRZEUGUNFÄLLE**
HIGH-POWER LIGHTING DEVICE FOR SIMULATION APPARATUS FOR MOTOR VEHICLE ACCIDENTS
ÉCLAIRAGE À HAUTE PERFORMANCE POUR UN DISPOSITIF DE SIMULATION D'UN ACCIDENT DE VÉHICULE

(43) Veröffentlichungstag der Anmeldung: 22.05.2019
(73) Patentinhaber: Atlas Material Testing Technology GmbH, 63589 Linsengericht/Altenhasslau (DE)
(72) Erfinder: MARCH, Peter, 65931 Frankfurt a. Main (DE); RUDOLPH, Bernd, 63755 Alzenau (DE)
(74) Vertreter: Lambsdorff & Lange Patentanwälte Partnerschaft mbB

(56) Entgegenhaltungen:
- CN-U- 201 716 171
- US-A1- 2013 229 518
- US-A1- 2015 197 182
- US-A1- 2017 219 459

## Beschreibung

### TECHNISCHES GEBIET

Die vorliegende Offenbarung bezieht sich auf eine Beleuchtungseinheit und auf die Verwendung mehrerer derartiger Beleuchtungseinheiten in einer Beleuchtungsvorrichtung für eine Simulationsanordnung für Kraftfahrzeugunfälle.

### HINTERGRUND

Es sind seit langem Verfahren und Vorrichtungen zum Überprüfen von Wirkungen eines Kraftfahrzeugunfalls bekannt, welche herkömmlicherweise unter den Kurzbezeichnungen Crash-Test und Crash-Testanlage bekannt sind. Bei einem derartigen Crash-Test wird ein Kraftfahrzeug an einen vorher definierten Kollisionspunkt mit seinem eigenen oder einem Fremd-Antrieb geführt. Der Moment der Kollision wird mit speziellen Hochgeschwindigkeitskameras aufgezeichnet, die typischerweise Aufzeichnungsfrequenzen zwischen 1000 und 2000 Bildern pro Sekunde haben, um möglichst viele Einzelheiten aufzeichnen zu können, so dass die Auswirkungen der Kollision sehr genau analysiert werden können.

Die Verwendung derartiger Hochgeschwindigkeitskameras mit ihren kurzen Belichtungszeiten erfordert eine intensive und homogene Ausleuchtung des gesamten Kraftfahrzeugs im Zeitpunkt der Kollision. Zu diesem Zweck ist eine Beleuchtungsvorrichtung vorgesehen, welche aus einer Mehrzahl von Beleuchtungseinheiten besteht, welche zumeist an einer von einer Hallendecke herabhängenden Schiene verschieblich befestigt sind. Jede dieser Beleuchtungseinheiten richtet ein Strahlungsbündel auf einen Abschnitt des Kraftfahrzeugs. Das Ziel ist die Erreichung einer räumlich möglichst homogenen Ausleuchtung des gesamten Bereichs des Kraftfahrzeugs.

Von den zur Ausleuchtung des Kraftfahrzeugs während der Bildaufzeichnung verwendeten Beleuchtungseinheiten muss ein sehr hoher Lichtstrom erzeugt werden, damit das Kraftfahrzeug in einem ausreichenden Maße ausgeleuchtet werden kann, insbesondere um die vorstehend genannten Anforderungen der Hochgeschwindigkeitskameras erfüllen zu können.

Die Druckschrift US 2015/197182 A1 beschreibt eine Beleuchtungsvorrichtung mit einer Steuerschaltung, einem Beschleunigungsdetektor, der mit der Steuerschaltung zusammenarbeitet, und einer Vielzahl von Lichtquellen, die mit der Steuerschaltung zusammenarbeiten und von der Steuerschaltung so angesteuert wird, um mit einer Beleuchtungsstärke zu arbeiten, die zwischen einer ersten Beleuchtungsstärke ungleich Null und einer zweiten Beleuchtungsstärke ungleich Null variiert.

Die Druckschrift US 2013/229518 A1 beschreibt ein Beleuchtungssystem, das eine Lichtquelle, einen zweidimensionalen on-passiven Infrarot-Bildgeber und einen Controller enthält, wobei die Lichtquelle mindestens zwei Beleuchtungsstufen bereitstellen kann.

### KURZFASSUNG

Ein erster Aspekt der Offenbarung bezieht sich gemäß Patentanspruch 1 auf eine Beleuchtungseinheit.

Ein zweiter Aspekt der Offenbarung bezieht sich gemäß Patentanspruch 8 auf eine Verwendung mehrerer Beleuchtungseinheiten gemäß dem ersten Aspekt in einer Beleuchtungsvorrichtung für eine Simulationsanordnung für Kraftfahrzeugunfälle.

Der Fachmann erkennt zusätzliche Merkmale und Vorteile beim Lesen der nachfolgenden ausführlichen Beschreibung und der beiliegenden Zeichnungen.

### KURZE BESCHREIBUNG DER ZEICHNUNGEN

Die beiliegenden Zeichnungen stellen Ausführungsbeispiele dar und dienen zusammen mit der Beschreibung zum Erläutern von Prinzipien der vorliegenden Offenbarung sowie Einzelheiten der Ausführungsbeispiele.
Fig. 1 zeigt eine schematische Draufsicht auf eine Simulationsanordnung für Kraftfahrzeugunfälle.
Fig. 2 zeigt ein schematisches Blockschaltbild eines Ausführungsbeispiels einer Beleuchtungseinheit gemäß dem ersten Aspekt.
Fig. 3 zeigt ein schematisches Blockschaltbild eines Ausführungsbeispiels einer Beleuchtungseinheit gemäß dem ersten Aspekt, bei welchem die Beleuchtungseinheit mehrere Gruppen von LEDs und jeweils zugehörige Leistungsregler sowie eine Lichtquellen-Steuereinrichtung aufweist, welche mit jedem der Leistungsregler verbunden ist.
Fig. 4 zeigt eine Draufsicht auf eine Lichtquelle eines Ausführungsbeispiels einer Beleuchtungseinheit gemäß dem ersten Aspekt, wobei die Lichtquelle eine matrixartige Anordnung von LEDs aufweist.
Fig. 5 zeigt ein schematisches Blockschaltbild eines Ausführungsbeispiels einer Beleuchtungsvorrichtung, welche eine Anzahl von n Beleuchtungseinheiten aufweist
Fig. 6 zeigt ein beispielhaftes Strom-Zeit-Diagramm, welches die Zeitabhängigkeit des den LEDs zugeführten Stroms vor, während und nach der Durchführung eines Crashtests darstellt.

### DETAILLIERTE BESCHREIBUNG

In der folgenden ausführlichen Beschreibung wird auf die beigefügten Zeichnungen Bezug genommen, die Teil dieser bilden und in denen zur Veranschaulichung spezifische Ausführungsbeispiele gezeigt sind, in denen die vorliegende Offenbarung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen der vorliegenden Offenbarung in einer Anzahl verschiedener Orientierungen positioniert werden können, dient die Richtungsterminologie zur Veranschaulichung und ist auf keinerlei Weise einschränkend. Es versteht sich, dass andere Ausführungsbeispiele benutzt und strukturelle oder logische Änderungen vorgenommen werden können, ohne von dem Schutzumfang der vorliegenden Offenbarung abzuweichen. Die folgende ausführliche Beschreibung ist deshalb nicht in einschränkendem Sinne aufzufassen und der Schutzumfang der vorliegenden Offenbarung wird durch die angefügten Ansprüche definiert.

Insofern in der folgenden Beschreibung, den Patentansprüchen oder den Zeichnungen zum Ausdruck gebracht wird, dass Schaltungselemente miteinander "verbunden", "elektrisch verbunden" oder "elektrisch gekoppelt" sind, so kann dies bedeuten, dass die genannten Elemente direkt, d.h. ohne dazwischen befindliche weitere Elemente miteinander gekoppelt sind. Es kann jedoch auch bedeuten, dass die genannten Elemente nicht direkt miteinander gekoppelt sind und dass weitere Elemente zwischen die genannten Elemente gekoppelt sind. Insofern in den Figuren gleiche Bezugszeichen verwendet werden, so beziehen sich diese auf gleiche oder funktionsgleiche Elemente, so dass in diesen Fällen die Beschreibung dieser Elemente nicht wiederholt wird.

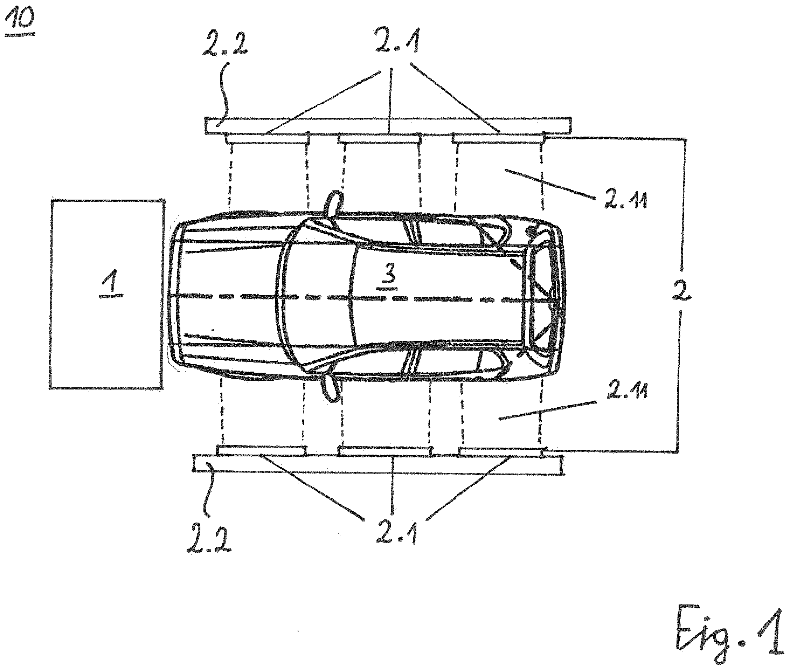

Fig. 1 zeigt in schematischer und stark vereinfachter Form die wesentlichen Bestandteile einer Crash-Testanlage. Die gewählte Darstellung soll lediglich nochmals den Ausgangspunkt für die vorliegende Offenbarung verdeutlichen. Eine Crash-Testanlage 10 weist einen Kollisionspunkt 1, eine Beleuchtungsvorrichtung 2 und eine Mehrzahl von Hochgeschwindigkeitskameras (nicht dargestellt) auf, welche den Moment des Aufpralls eines Kraftfahrzeugs 3 auf den Kollisionspunkt 1 aufnehmen sollen. Der Kollisionspunkt 1 kann ein feststehendes unbewegliches Hindernis oder ein weiteres Fahrzeug sein. Die Beleuchtungsvorrichtung 2 kann eine Mehrzahl von Beleuchtungseinheiten 2.1 aufweisen, welche beispielsweise an einer Schiene 2.2 befestigt sind, welche ihrerseits an der Hallendecke aufgehängt ist. Es sind beispielshalber drei Beleuchtungseinheiten 2.1 gezeigt. Jede der Beleuchtungseinheiten 2.1 emittiert ein Strahlungsbündel 2.11 in Richtung auf das Kraftfahrzeug 3. Die Beleuchtungseinheiten 2.1 können beispielsweise mit speziellen Vorschaltgeräten betriebene Halogen-Gasentladungslampen oder Lichtemissionsdioden (LED), insbesondere Weißlicht-LEDs, enthalten.

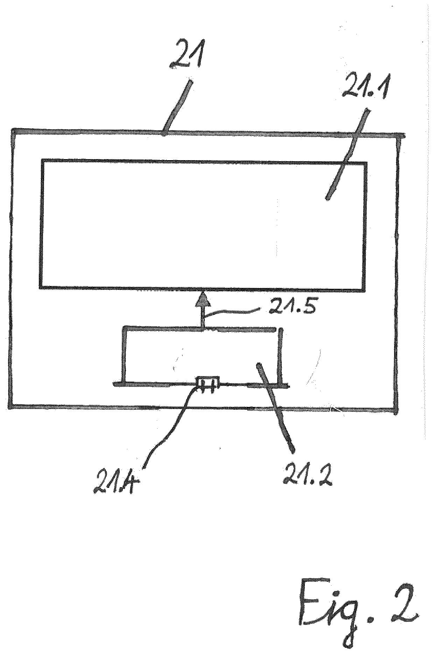

Fig. 2 zeigt ein schematisches Blockschaltbild eines Ausführungsbeispiels einer Beleuchtungseinheit gemäß dem ersten Aspekt. Eine Beleuchtungseinheit 21 gemäß dem ersten Aspekt weist eine Lichtquelle 21.1, mindestens einen Leistungsregler 21.2, insbesondere einen Stromregler, der mit der Lichtquelle 21.1 verbunden ist, und einen Eingang 21.4 für die Zufuhr eines Startsignals auf. Ein Ausgang des Leistungsreglers 21.2 ist mit der Lichtquelle 21.1 über eine Leitung 21.5 verbunden. Die Lichtquelle 21.1 kann eine Mehrzahl von Lichtemissionsdioden (LEDs), insbesondere Weißlicht-LEDs 21.11, aufweisen.

Der Leistungsregler 21.2 ist dafür konfiguriert, die Zufuhr von elektrischer Leistung, insbesondere von elektrischem Strom, zu der Lichtquelle 21.1 derart zu steuern, dass nach Empfang des Startsignals die zugeführte elektrische Leistung von einem ersten Wert auf einen zweiten Wert gesteigert wird, wobei der erste Wert von Null verschieden und der zweite Wert größer als der erste Wert ist. Der Leistungsregler 21.2 kann die elektrische Leistung oder den elektrischen Strom aus dem öffentlichen Stromnetz beziehen (nicht dargestellt). Über die Leitung 21.5 wird dann die Lichtquelle 21.1 mit elektrischem Strom gemäß dem ersten Wert oder dem zweiten Wert beschickt. Wie noch zu sehen sein wird, kann jede Beleuchtungseinheit 21 auch eine Mehrzahl von Leistungsreglern 21.2 enthalten.

Der zweite Wert kann beispielsweise ein Maximalwert der der Lichtquelle zuführbaren elektrischen Leistung sein und mit 100% gekennzeichnet werden. Ein solcher Maximalwert der elektrischen Leistung kann z.B. u.a. von der thermischen Belastbarkeit der LEDs 21.11 und/oder von der Leistungsfähigkeit des Leistungsreglers 21.2 abhängen. Unabhängig davon kann der erste Wert der elektrischen Leistung in einem Bereich zwischen 10% und 50%, insbesondere zwischen 20% und 40%, vorzugsweise etwa 30%, des zweiten Werts, also etwa des Maximalwerts der elektrischen Leistung, insbesondere des elektrischen Stroms, liegen.

Gemäß einem Beispiel der Beleuchtungseinheit nach dem ersten Aspekt weist die Lichtquelle 21.1 eine Mehrzahl von Lichtemissionsdioden (LEDs) 21.11, insbesondere Weißlicht-LEDs, auf, welche in Form einer Matrix angeordnet sein können. Alternativ dazu kann die Lichtquelle 21.1 auch durch eine Halogen-Gasentladungslampe gegeben sein.

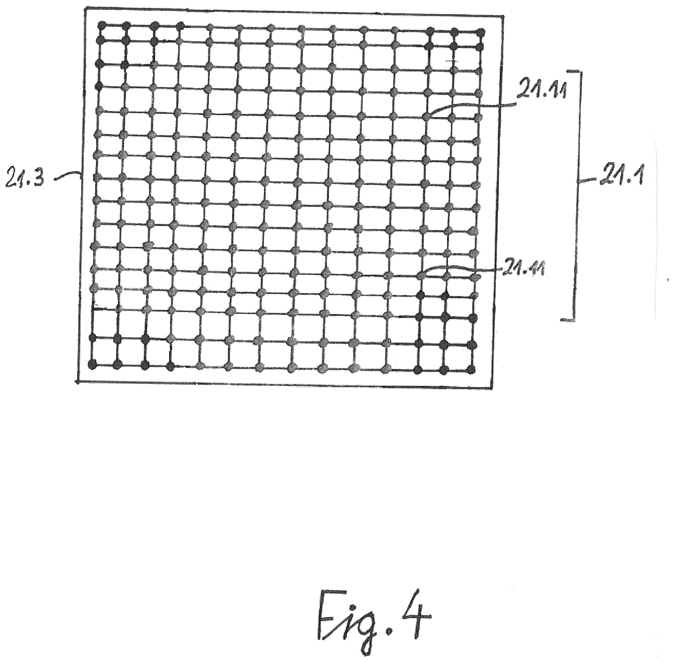

Wie in Fig. 4 gezeigt ist, kann die matrixförmige Anordnung der LEDs 21.11 innerhalb eines flachen rechteckigen Gehäuses 21.3 befestigt sein, das vier Seitenwände und eine Rückwand (nicht sichtbar) aufweist.

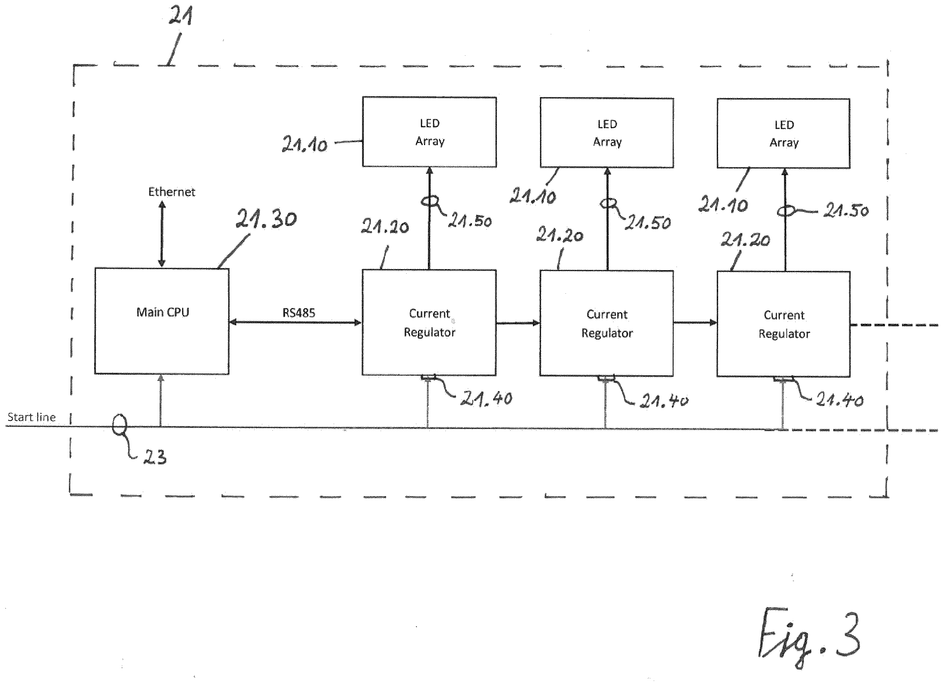

Fig. 3 zeigt ein Blockschaltbild einer Beleuchtungseinheit gemäß dem ersten Aspekt, welche eine Mehrzahl von Leistungsreglern aufweist, von denen jeder mit einer Gruppe von LEDs verbunden ist. Die Beleuchtungseinheit 21 der Fig. 3 weist eine Mehrzahl von Gruppen 21.10 von LEDs 21.11 und eine entsprechende Mehrzahl von Leistungsreglern 21.20 auf, wobei jede Gruppe 21.10 von LEDs 21.11 mit einem der Leistungsregler 21.20 verbunden ist und von diesem angesteuert wird. Jeder der Leistungsregler 21.20 kann so ausgestaltet sein wie der Leistungsregler 21.2 der Fig. 1. Bezugnehmend auf Fig. 4 können die Gruppen 21.10 von LEDs 21.11 auf verschiedene Art und Weise gebildet werden. Beispielsweise können die Gruppen 21.10 mehrere neben- oder untereinander liegende Zeilen oder Spalten der Matrix von LEDs 21.11 sein. Alternativ können die Gruppen 21.10 auch aus Teilmatrizen der gesamten Matrix gebildet sein, beispielsweise indem die Gesamtmatrix in vier Quadranten aufgeteilt wird.

Eine Lichtquelle 21.1 kann beispielsweise eine Gesamtzahl von 150 bis 250, insbesondere ca. 200 LEDs, aufweisen, welche in Blöcken von 15-20 LEDs, insbesondere ca. 18 LEDs, unterteilt ist, die dann jeweils von einem Leistungsregler angesteuert werden.

Erfindungsgemäß weist die Beleuchtungseinheit 21 ferner eine Lichtquellen-Steuereinrichtung 21.30 auf, welche mit dem einen oder den mehreren Leistungsreglern 21.20 verbunden ist. Die Lichtquellen-Steuereinrichtung 21.30 kann durch einen Mikrocontroller gegeben sein. Die Lichtquellen-Steuereinrichtung 21.30 ist konfiguriert, von den Leistungsreglern 21.20 Parameter und Betriebsdaten abzufragen, wobei die Parameter und Betriebsdaten beispielsweise die Temperatur der LEDs 21.11, die Temperatur der Leistungsregler 21.20 oder die Lichtleistung bei dem ersten Wert der elektrischen Leistung sein können.

Jeder der Leistungsregler 21.20 weist einen Eingang auf, welcher identisch mit dem Eingang 21.4 der Beleuchtungseinheit 21 der Fig. 2 sein kann und mit der Startleitung 23 verbindbar sein kann oder verbunden ist. Ein Ausgang jedes der Leistungsregler 21.20 ist über eine Leitung 21.50, welche der Leitung 21.5 der Fig. 2 entspricht, mit einem Eingang von einer der Gruppen 21.10 der Lichtquelle 21.1, insbesondere mit den LEDs 21.11 der entsprechenden Gruppe 21.10, verbunden.

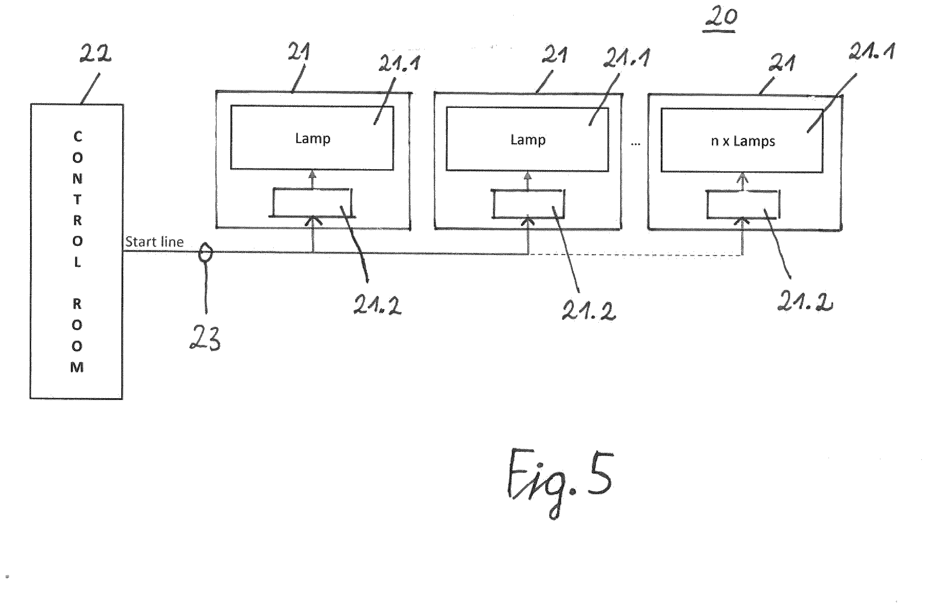

In der Fig. 5 ist ein Ausführungsbeispiel einer Beleuchtungsvorrichtung dargestellt. Die Beleuchtungsvorrichtung 20 der Fig. 5 weist eine Mehrzahl von Beleuchtungseinheiten 21 auf, wobei jede Beleuchtungseinheit 21 eine Lichtquelle 21.1 und mindestens einen Leistungsregler 21.2 aufweist. Die Beleuchtungseinheit 21 kann nach einem der Ausführungsbeispiele der Fig. 2 oder Fig. 3 ausgeführt sein.

Die Beleuchtungsvorrichtung 20 weist ferner eine Haupt-Steuereinrichtung 22 auf, welche mit einer Startleitung 23 verbunden ist, welche mit jedem der Leistungsregler 21.2 verbunden ist, wobei die Haupt-Steuereinrichtung 22 konfiguriert ist, das Startsignal zu erzeugen und der Startleitung 23 zuzuführen.

Gemäß einem Beispiel der Beleuchtungsvorrichtung 20 können die Beleuchtungseinheiten 21 in ein mit der Haupt-Steuereinrichtung 22 verbundenes Ethernet-Netzwerk eingebunden sein, wobei beispielsweise genau eine Ethernet-Leitung mit jeder Beleuchtungseinheit 21, insbesondere mit der Lichtquellen-Steuereinrichtung 21.30 der Beleuchtungseinheit 21, verbunden sein kann. Die Lichtquellen-Steuereinrichtung 21.30 kann dann ihrerseits mit den Leistungsreglern 21.20 durch ein RS485-Bussystem verbunden sein, über welches die Parameter und Betriebsdaten übermittelt und an das Ethernet-Netzwerk weitergeleitet werden.

Das Startsignal kann manuell durch eine Bedienperson oder automatisch ausgelöst werden. Im letzteren Fall kann das Startsignal beispielsweise durch eine Lichtschranke oder einem elektrischen Kontakt an der Simulationsanordnung für Kraftfahrzeugunfälle ausgelöst werden. Es kann vorgesehen sein, dass das Startsignal nicht ausgelöst werden kann, wenn mindestens ein Leistungsregler Parameter oder Betriebsdaten der jeweils zugehörigen Lichtquelle 21.10 über das RS485-Bussystem liefert, die bestimmte Voraussetzungen nicht erfüllen bzw. außerhalb vorbestimmter Bereiche liegen und somit mangelnde Betriebsbereitschaft oder eine unzureichende Leistungsfähigkeit der zugehörigen Lichtquelle anzeigen. Dementsprechend wird das Startsignal nur dann ausgelöst, wenn alle Lichtquellen bzw. alle LED-Gruppen mittels der übermittelten Parameter oder Betriebsdaten ausreichende Betriebsbereitschaft melden.

Das Startsignal wird den Beleuchtungseinheiten 21 gleichzeitig zugeführt, um die Steigerung der elektrischen Leistung von dem ersten Wert auf den zweiten Wert zu initiieren. Das Startsignal kann beispielsweise ein 24V-Rechtecksignal sein, dessen zeitliche Länge ausreichend sein muss, um von der elektrischen Schaltung der Leistungsregler 21.2 oder 21.20 erkannt werden zu können. Die zeitliche Länge ist jedenfalls kürzer als die vorgegebene Zeitspanne, während der die Lichtquelle mit dem zweiten Wert der elektrischen Leistung beschickt wird.

Die Startleitung 23 kann durch eine Eindraht- oder eine Zweidrahtleitung gegeben sein. Gemäß einem Beispiel für eine Zweidrahtleitung werden drei Masseleitungen und zwei Signalleitungen benötigt. Die beiden Signalleitungen übertragen das Nutzsignal jeweils mit entgegengesetzter Polarität. Mittels dieser Konfiguration können Gleichtaktstörungen unterdrückt werden. Wie in Fig. 3 gezeigt, weist die Startleitung 23 eine entsprechende Anzahl Abzweigungen zu den Leistungsreglern 21.20 auf. Die Eingänge 21.40 der Leistungsregler 21.20 sind derart ausgebildet, um mit einer Startleitung wie oben beschrieben verbunden werden zu können.

Die Lichtquellen-Steuereinrichtung 21.30 kann ebenfalls einen Eingang aufweisen, welcher mit der Startleitung 23 verbunden ist. Das Startsignal kann in der Lichtquellen-Steuereinrichtung 21.30 beispielsweise einen Ereigniszähler triggern.

Gemäß einem Beispiel der Beleuchtungsvorrichtung 20 ist jeder Leistungsregler 21.2 konfiguriert, die zugeführte elektrische Leistung während einer vorgegebenen Zeitspanne auf dem zweiten Wert zu halten und sie nach Ablauf der vorgegebenen Zeitspanne wieder auf den ersten Wert abzusenken. Die vorgegebene Zeitspanne ist so gewählt, dass ein Crashtest durchgeführt und während des Crashtests die Aufnahmen mit den Hochgeschwindigkeitskameras gemacht werden können. Sie kann in einem Bereich zwischen 5s und 30s, insbesondere zwischen 10s und 20s, vorzugweise bei etwa 15s, liegen.

Eine Simulationsanordnung für Kraftfahrzeugunfälle kann eine wie zuvor beschriebene Beleuchtungsvorrichtung aufweisen. Die Simulationsanordnung kann insbesondere mit der Haupt-Steuereinrichtung der Beleuchtungsvorrichtung verbunden sein, wobei ein das Startsignal auslösendes Signal von der Simulationsanordnung mittels einer Lichtschranke oder eines elektrischen Kontakts erzeugt und an die Haupt-Steuereinrichtung übermittelt wird. Es kann auch vorgesehen sein, dass die Beleuchtungsvorrichtung, insbesondere die Haupt-Steuereinrichtung mit einer oder mehreren der Hochgeschwindigkeitskameras synchronisiert wird.

Zum Betrieb einer wie oben beschriebenen Beleuchtungsvorrichtung für eine Simulationsanordnung für Kraftfahrzeugunfälle wird die der Lichtquelle zugeführte elektrische Leistung von einem ersten Wert auf einen zweiten Wert erhöht, wobei der erste Wert von Null verschieden und der zweite Wert größer als der erste Wert ist.

Dabei kann beispielsweise die elektrische Leistung während einer vorgegebenen Zeitspanne auf dem zweiten Wert gehalten werden und es können die Beleuchtungseinheiten vor und nach der vorgegebenen Zeitspanne überwacht werden und Parameter und Betriebsdaten der Lichtquelle und eines die Lichtquelle ansteuernden Leistungsreglers können gesammelt werden.

Weiterhin kann ein Startsignal erzeugt und den Beleuchtungseinheiten gleichzeitig zugeführt werden, um die Steigerung der elektrischen Leistung von dem ersten Wert auf den zweiten Wert zu initiieren. Das Startsignal kann durch eine Lichtschranke oder einen elektrischen Kontakt an der Simulationsanordnung für Kraftfahrzeugunfälle ausgelöst werden.

Weitere Beispiele können durch Kombination mit weiter oben im Zusammenhang mit der Beleuchtungsvorrichtung beschriebenen Merkmalen und Ausführungsformen gebildet werden.

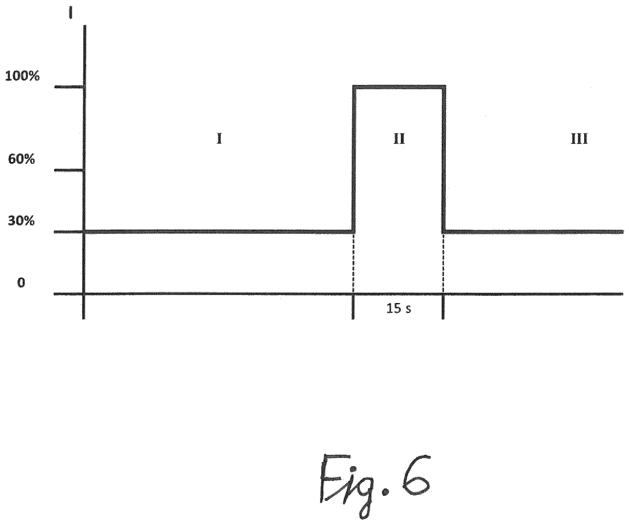

In der Fig. 6 ist ein Strom-Zeit-Diagramm dargestellt, welches die Zeitabhängigkeit des der Lichtquelle zugeführten Stroms I darstellt. Das Strom-Zeit-Diagramm weist drei Phasen I - III auf. In der ersten Phase I liegt der den Lichtquellen zugeführte Strom bei einem Wert von 30% des Maximalwerts von 100% des Stroms. Die zweite Phase II wird durch das den Beleuchtungseinheiten 21.2 oder 21.20 zugeführte Startsignal eingeleitet. Die Steigerung des elektrischen Stroms von 30% auf 100% kann beispielsweise in einer Zeitspanne in einem Bereich von 1 µs bis 20 µs erfolgen. Während der zweiten Phase II, welche in diesem Beispiel eine Zeitdauer von 15 s umfasst, wird der den Beleuchtungseinheiten zugeführte Strom auf den Maximalwert 100% erhöht und der Crash-test durchgeführt. In der dritten Phase III werden nach Beendigung des Crashtests bzw. nach dem Ende der Aufnahmen durch die Hochgeschwindigkeitskamera der den Beleuchtungseinheiten zugeführte Strom I wieder auf den Ausgangswert von z.B. 30% abgesenkt.

Obwohl spezifische Ausführungsformen in dieser Beschreibung dargestellt und beschrieben wurden, ist für den Fachmann auf dem Gebiet zu erkennen, dass die gezeigten und beschriebenen spezifischen Ausführungsformen gegen eine Vielfalt von alternativen und/oder äquivalenten Implementierungen ausgetauscht werden können, ohne vom Schutzbereich der vorliegenden Ansprüche abzuweichen. Diese Offenbarung ist nur durch die Ansprüche begrenzt.

## Patentansprüche

1. Beleuchtungseinheit (21), mit
- einer Lichtquelle (21.1; 21.10);
- einem Leistungsregler (21.2; 21.20), welcher dafür konfiguriert ist, die Zufuhr von elektrischer Leistung zu der Lichtquelle (21.1) derart zu steuern, dass nach Empfang eines Startsignals die zugeführte elektrische Leistung von einem ersten Wert auf einen zweiten Wert gesteigert wird, wobei der erste Wert von Null verschieden und der zweite Wert größer als der erste Wert ist; und
- einem Eingang (21.4) für die Zufuhr des Startsignals;
**gekennzeichnet durch**
eine Lichtquellen-Steuereinrichtung (21.30), welche mit dem Leistungsregler (21.2; 21.20) verbunden ist und konfiguriert ist, von dem Leistungsregler (21.2; 21.20) Parameter und Betriebsdaten abzufragen.

2. Beleuchtungseinheit (21) nach Anspruch 1, bei welcher die Lichtquelle (21.1) eine Mehrzahl von Gruppen von LEDs (21.11) und eine entsprechende Mehrzahl von Leistungsreglern (21.20) aufweist und jede Gruppe mit einem Leistungsregler (21.20) verbunden ist.

3. Beleuchtungseinheit (21) nach Anspruch 2, bei welcher die Lichtquellen-Steuereinrichtung (21.30)mit der Mehrzahl von Leistungsreglern (21.20) verbunden ist und konfiguriert ist, von den Leistungsreglern (21.20) Parameter und Betriebsdaten abzufragen.

4. Beleuchtungseinheit (21) nach einem der vorherigen Ansprüche, bei welcher
die Parameter und Betriebsdaten eine oder mehrere der folgenden Daten umfassen: die Temperatur der LEDs (21.11), die Temperatur der Leistungsregler (21.2; 21.20), und die Lichtleistung bei dem ersten Wert der elektrischen Leistung.

5. Beleuchtungseinheit (21) nach Anspruch 3 oder 4, bei welcher
die Lichtquellen-Steuereinrichtung (21.30) mit den Leistungsreglern (21.2; 21.20) über ein RS485-Bussystem verbunden ist.

6. Beleuchtungseinheit (21) nach einem der vorherigen Ansprüche, bei welcher
der oder jeder Leistungsregler (21.2; 21.20) konfiguriert ist, die zugeführte elektrische Leistung während einer vorgegebenen Zeitspanne auf dem zweiten Wert zu halten und sie nach Ablauf der vorgegebenen Zeitspanne wieder auf den ersten Wert abzusenken.

7. Beleuchtungseinheit (21) nach einem der vorherigen Ansprüche, bei welcher
der erste Wert der elektrischen Leistung in einem Bereich zwischen 20% und 40% des zweiten Werts der elektrischen Leistung liegt.

8. Verwendung von Beleuchtungseinheiten in einer Beleuchtungsvorrichtung (20) für eine Simulationsanordnung für Kraftfahrzeugunfälle, mit:
- einer Mehrzahl von in der Beleuchtungsvorrichtung (20) enthaltenen Beleuchtungseinheiten (21) nach einem der vorhergehenden Ansprüche; und
- einer Haupt-Steuereinrichtung (22), welche mit einer Startleitung (23) verbunden ist, welche mit jedem der Leistungsregler (21.2) verbunden ist, wobei die Haupt-Steuereinrichtung (22) konfiguriert ist, das Startsignal zu erzeugen und der Startleitung (23) zuzuführen.

9. Verwendung nach Anspruch 8, bei welcher
die Haupt-Steuereinrichtung (22) mit den Beleuchtungseinheiten (21) durch ein Ethernet verbunden ist.

## Claims

1. Illumination unit (21), comprising
- a light source (21.1; 21.10);
- a power controller (21.2; 21.20) configured to control the supply of electrical power to the light source (21.1) such that, upon receipt of a start signal, the supplied electrical power is increased from a first value to a second value, the first value being different from zero and the second value being greater than the first value; and
- an input (21.4) for supplying the start signal; **characterised by**
a light source control device (21.30) which is connected to the power controller (21.2; 21.20) and is configured to request parameters and operating data from the power controller (21.2; 21.20).

2. Illumination unit (21) according to claim 1, in which the light source (21.1) comprises a plurality of groups of LEDs (21.11) and a corresponding plurality of power controllers (21.20) and each group is connected to a power controller (21.20).

3. Illumination unit (21) according to claim 2, wherein
the light source control device (21.30) is connected to the plurality of power controllers (21.20) and is configured to request parameters and operating data from the power controllers (21.20).

4. Illumination unit (21) according to one of the preceding claims, in which
the parameters and operating data comprise one or more of the following data: the temperature of the LEDs (21.11), the temperature of the power controllers (21.2; 21.20), and the light output at the first value of the electrical power.

5. Illumination unit (21) according to claim 3 or 4, wherein
the light source control device (21.30) is connected to the power controllers (21.2; 21.20) via an RS485 bus system.

6. Illumination unit (21) according to one of the preceding claims, in which
the or each power controller (21.2; 21.20) is configured to maintain the supplied electrical power at the second value for a predetermined period of time and to lower it back to the first value after the predetermined period of time has elapsed.

7. Illumination unit (21) according to one of the preceding claims, in which
the first value of the electrical power is in a range between 20% and 40% of the second value of the electrical power .

8. Use of illumination units in a lighting device (20) for a simulation arrangement for motor vehicle accidents, comprising:
- a plurality of lighting units (21) included in the lighting device (20) according to one of the preceding claims; and
- a main controller (22) connected to a start line (23) connected to each of the power controllers (21.2), wherein the main controller (22) is configured to generate and supply the start signal to the start line (23).

9. Use according to claim 8, wherein
the main control device (22) is connected to the lighting units (21) by an Ethernet.

## Revendications

1. Unité d'éclairage (21), comprenant
- une source lumineuse (21.1 ; 21.10) ;
- un régulateur de puissance (21.2 ; 21.20) configuré pour commander l'alimentation en puissance électrique de la source lumineuse (21.1) de telle sorte qu'à la réception d'un signal de démarrage, la puissance électrique fournie est augmentée d'une première valeur à une deuxième valeur, la première valeur étant différente de zéro et la deuxième valeur étant supérieure à la première valeur; et
- une entrée (21.4) pour l'application du signal de démarrage;
**constructionnée** par
un dispositif de commande de source lumineuse (21.30) qui est connecté au régulateur de puissance (21.2 ; 21.20) et qui est configuré pour demander des paramètres et des données de fonctionnement au régulateur de puissance (21.2 ; 21.20).

2. Unité d'éclairage (21) selon la revendication 1, dans laquelle
la source lumineuse (21.1) comprend une pluralité de groupes de LED (21.11) et une pluralité correspondante de régulateurs de puissance (21.20), et chaque groupe est connecté à un régulateur de puissance (21.20).

3. Unité d'éclairage (21) selon la revendication 2, dans laquelle
le dispositif de commande de source lumineuse (21.30) est connecté à la pluralité de régulateurs de puissance (21.20) et est configuré pour demander des paramètres et des données de fonctionnement aux régulateurs de puissance (21.20).

4. Unité d'éclairage (21) selon l'une quelconque des revendications précédentes, dans laquelle
les paramètres et données de fonctionnement comprennent une ou plusieurs des données suivantes : la température des LED (21.11), la température des régulateurs de puissance (21.2 ; 21.20), et la puissance lumineuse à la première valeur de la puissance électrique.

5. Unité d'éclairage (21) selon la revendication 3 ou 4, dans laquelle
le dispositif de commande de la source lumineuse (21.30) est relié aux régulateurs de puissance (21.2 ; 21.20) par un système de bus RS485.

6. Unité d'éclairage (21) selon l'une quelconque des revendications précédentes, dans laquelle
le ou chaque régulateur de puissance (21.2 ; 21.20) est configuré pour maintenir la puissance électrique fournie à la deuxième valeur pendant une durée prédéterminée et pour la ramener à la première valeur à l'issue de la durée prédéterminée.

7. Unité d'éclairage (21) selon l'une des revendications précédentes, dans laquelle
la première valeur de la puissance électrique est comprise dans une plage allant de 20% à 40% de la deuxième valeur de la puissance électrique.

8. Utilisation d'unités d'éclairage dans un dispositif d'éclairage (20) pour un système de simulation d'accident automobile, comprenant :
- une pluralité d'unités d'éclairage (21) incluses dans le dispositif d'éclairage (20) selon l'une des revendications précédentes ; et
- un contrôleur principal (22) relié à une ligne de démarrage (23) reliée à chacun des régulateurs de puissance (21.2), le contrôleur principal (22) étant configuré pour générer et fournir le signal de démarrage à la ligne de démarrage (23).

9. Utilisation selon la revendication 8, dans laquelle
Le contrôleur principal (22) est connecté aux unités d'éclairage (21) par Ethernet.
